# EUROPEAN PATENT APPLICATION

(11) **EP 4 467 230 A1**
(43) Date of publication of application: **27.11.2024**
(21) Application number: 24174522.3
(22) Date of filing: 07.05.2024
(51) Int. Cl.: B01D 53/94, B01J 23/63, B01J 35/00, B01J 35/57, F01N 3/10

(54) **EXHAUST GAS PURIFICATION DEVICE**

(30) Priority: 22.05.2023 JP 2023084149
(71) Applicant: CATALER CORPORATION, Kakegawa-shi, Shizuoka 437-1492 (JP)
(72) Inventor: TOJO, Takumi, Aichi, 471-8571 (JP); NISHIO, Takahiro, Aichi, 471-8571 (JP); TAKAGI, Nobuyuki, Aichi, 471-8571 (JP); HOSHINO, Sho, Shizuoka, 437-1492 (JP); TODA, Yosuke, Shizuoka, 437-1492 (JP); SAKAMOTO, Shun, Shizuoka, 437-1492 (JP); SHIMIZU, Kengo, Shizuoka, 437-1492 (JP); FUJITA, Naoto, Shizuoka, 437-1492 (JP)
(74) Representative: Kuhnen & Wacker Patent- und Rechtsanwaltsbüro PartG mbB

(57) **Abstract**

Provided is an exhaust gas purification device having a high warm-up performance and a high NOx conversion performance. The exhaust gas purification device includes a substrate having an upstream end and a downstream end, a first catalyst layer disposed on the substrate in a first region extending between the downstream end and a first position and containing rhodium, a second catalyst layer disposed on the substrate in a second region extending between the upstream end and a second position and containing rhodium and an oxygen storage material, and a third catalyst layer disposed on the second catalyst layer in a third region extending between the upstream end and a third position and containing palladium. The oxygen storage material in the second catalyst layer contains a pyrochlore type Ce-Zr composite oxide and a fluorite type Ce-Zr composite oxide at a weight ratio of from 0.2:1 to 0.4:1.

## Description

### BACKGROUND

### Technical Field

The present disclosure relates to an exhaust gas purification device.

### Background Art

An exhaust gas emitted from an internal combustion engine used in a vehicle, such as an automobile, contains a harmful substance, such as carbon monoxide (CO), hydrocarbon (HC), and nitrogen oxide (NOx). Regulations on emission amounts of these harmful substances have been tightened year by year. To remove these harmful substances, an exhaust gas purification device including a noble metal, such as platinum (Pt), palladium (Pd), and rhodium (Rh), as a catalyst has been used.

JP 2001-205051 A discloses an exhaust gas purification device for satisfying a warm-up performance, an HC conversion performance, and durability.

### SUMMARY

It is desired to further improve the warm-up performance of the exhaust gas purification device. It is also desired to further reduce performance deterioration of the exhaust gas purification device in use.

In such a circumstance, the present disclosure provides an exhaust gas purification device having a high warm-up performance and a reduced performance deterioration due to use.

The present disclosure includes the following aspects.
1. An exhaust gas purification device comprising:
   a substrate with a total length (Ls), the substrate having an upstream end through which an exhaust gas flows into the substrate and a downstream end through which the exhaust gas flows out from the substrate;
   a first catalyst layer disposed on the substrate in a first region, the first region extending between the downstream end and a first position, the first position being at a first distance (La) from the downstream end toward the upstream end, the first catalyst layer containing rhodium, and the first distance (La) being from 50% to 70% of the total length (Ls) of the substrate;
   a second catalyst layer disposed on the substrate in a second region, the second region extending between the upstream end and a second position, the second position being at a second distance (Lb) from the upstream end toward the downstream end, the second catalyst layer containing rhodium and an oxygen storage material, the second distance (Lb) being 50% or more of the total length (Ls) of the substrate, and the oxygen storage material containing a pyrochlore type Ce-Zr composite oxide and a fluorite type Ce-Zr composite oxide at a weight ratio of from 0.2:1 to 0.4:1; and
   a third catalyst layer disposed on the second catalyst layer in a third region, the third region extending between the upstream end and a third position, the third position being at a third distance (Lc) from the upstream end toward the downstream end, the third catalyst layer containing palladium, and the third distance (Lc) being 40% or less of the total length (Ls) of the substrate.
2. The exhaust gas purification device according to the aspect 1, wherein a total mass of the first catalyst layer based on a capacity of the substrate in the first region is 170 g/L or more.
3. The exhaust gas purification device according to the aspect 1 or 2, wherein a total mass of the third catalyst layer based on a capacity of the substrate in the third region is more than 0 g/L and 105 g/L or less.
4. The exhaust gas purification device according to any of the aspects 1 to 3, wherein the first catalyst layer further includes an oxygen storage material.

The exhaust gas purification device of the present disclosure has the high warm-up performance and reduced performance deterioration due to use.

### BRIEF DESCRIPTION OF THE DRAWINGS

FIG 1 is an enlarged end view of a main part of an exhaust gas purification device according to one embodiment taken along a surface parallel to a flow direction of an exhaust gas and schematically illustrating a configuration of a partition wall of a substrate and a proximity thereof;
FIG 2 is a perspective view schematically illustrating an example of the substrate;
FIG 3 is a graph illustrating a time taken for a THC conversion rate to reach 50% in a warm-up performance evaluation test;
FIG 4 is a graph illustrating NOx-T50 in a catalytic activity evaluation test; and
FIG 5 is a graph illustrating a NOx conversion rate in a performance evaluation test at a reduced temperature.

### DETAILED DESCRIPTION

The following will describe embodiments of the present disclosure with reference to the drawings. In the drawings referred in the following description, same reference numerals may be used for the same members or members having similar functions, and their repeated descriptions may be omitted in some cases. For convenience of explanation, a dimensional ratio in the drawings may differ from the actual ratio, and a part of a member may be omitted from the drawing in some cases. A numerical range expressed herein using the term "to" includes values described before and after the term "to" as the lower limit value and the upper limit value, respectively. Upper limit values and lower limit values of numerical ranges described herein can be appropriately combined. The term "on" herein includes both of "directly on" and "indirectly on" insofar as it is not especially specified in the context. The terms "comprise", "include", and "contain" herein mean that an additional component may be contained, and encompass the term "consist essentially of" and the term "consist of." The term "consist essentially of" means that an additional component having substantially no adverse effect may be contained. The term "consist of" means including only described materials, but does not exclude inclusion of inevitable impurities.

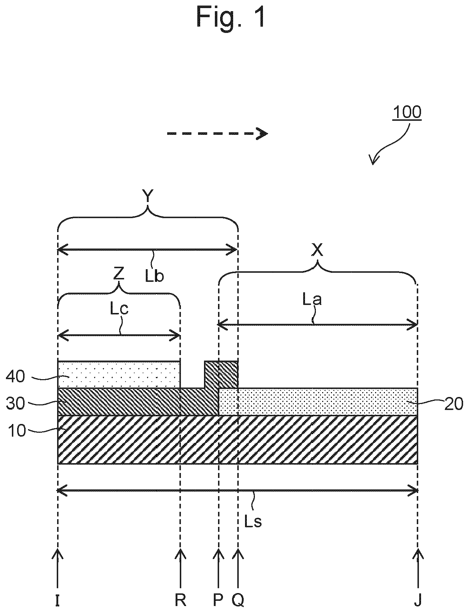

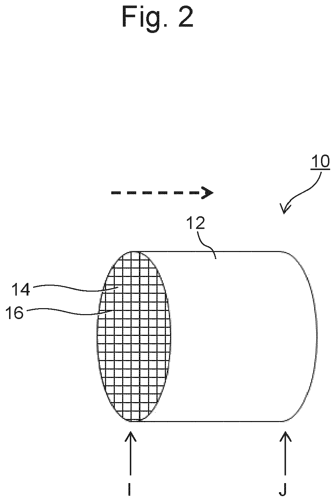

An exhaust gas purification device 100 according to the embodiment will be described with reference to FIGS. 1 and 2. The exhaust gas purification device 100 according to the embodiment includes a substrate 10, a first catalyst layer 20, a second catalyst layer 30, and a third catalyst layer 40.

### (1) Substrate 10

The shape of the substrate 10 is not specifically limited. For example, as illustrated in FIG 2, the substrate 10 may include a frame portion 12 and partition walls 16 that partition a space inside the frame portion 12 to define a plurality of cells 14. The partition walls 16 extend between a first end (a first end surface) I and a second end (a second end surface) J of the substrate 10 to define the plurality of cells 14 extending between the first end I and the second end J.

For example, the substrate 10 may be formed of a ceramic material having a high heat resistance, such as cordierite (2MgO·2Al₂O₃·5SiO₂), alumina, zirconia, and silicon carbide, or a metal foil, such as a stainless-steel foil.

In FIGS. 1 and 2, the dashed arrows indicate a flow direction of an exhaust gas in the exhaust gas purification device 100 and the substrate 10. The exhaust gas flows into the cells 14 of the substrate 10 through the first end I, and flows out from the cells 14 of the substrate 10 through the second end J. Therefore, hereinafter, the first end I will also be referred to as an upstream end I, and the second end J will also be referred to as a downstream end J as appropriate. A length between the upstream end I and the downstream end J, that is, the total length of the substrate 10, is herein denoted as Ls.

### (2) First Catalyst Layer 20

The first catalyst layer 20 is disposed on the substrate 10 in a first region X extending between the downstream end J and a first position P, which is at a first distance La from the downstream end J toward the upstream end I (that is, in an opposite direction of the flow direction of the exhaust gas). The first distance La is from 50% to 70% of the total length Ls of the substrate 10. The first catalyst layer 20 may have a length equal to the first distance La in the extending direction of the cell 14.

The first catalyst layer 20 contains rhodium. Rhodium mainly functions as a catalyst to reduce NOx. Rhodium may be particulate. Rhodium may be supported on carrier particles. The carrier particles may contain a metal oxide.

The first catalyst layer 20 may contain an oxygen storage material that stores oxygen in the atmosphere under oxygen excess atmosphere and releases oxygen under oxygen deficient atmosphere. Examples of the oxygen storage material include ceria (CeO₂), composite oxides of ceria and another oxide (for example, a Ce-Zr composite oxide, which is a composite oxide of ceria and zirconia (ZrO₂), and an Al-Ce-Zr composite oxide, which is a composite oxide of alumina (Al₂O₃), ceria, and zirconia), materials obtained by adding an additive to them, and mixtures thereof. The additive may be, for example, at least one of lanthana (La₂O₃), yttria (Y₂O₃), neodymia (Nd₂O₃), or praseodymia (Pr₆O₁₁), and these materials allow the heat resistance of the oxygen storage material to be improved. The additive may form a composite oxide together with a main component of the oxygen storage material. In particular, a Ce-Zr composite oxide may be used as the oxygen storage material because it has a high oxygen storage capacity (OSC) and is relatively inexpensive. The Ce-Zr composite oxide may have a structure of a pyrochlore type or a fluorite type. The oxygen storage material in the first catalyst layer 20 may contain a pyrochlore type Ce-Zr composite oxide and a fluorite type Ce-Zr composite oxide.

The first catalyst layer 20 may further contain another optional ingredient. Examples of another optional ingredient include, for example, a binder and an additive.

The total mass of the first catalyst layer 20 may be 170 g/L or more based on the capacity (volume) of the substrate 10 in the first region X. This provides the first catalyst layer 20 with a large thermal capacity (heat capacity), which reduces the temperature drop of the first catalyst layer 20 when a low-temperature exhaust gas flows into the exhaust gas purification device 100, allowing the exhaust gas purification device 100 to perform a satisfactory exhaust gas purification performance.

The first catalyst layer 20 can be formed as follows, for example. First, a slurry is prepared by mixing an aqueous solution of rhodium salt, an oxygen storage material, and an optional ingredient. The slurry is applied to the substrate 10 in the first region X, thus forming a slurry layer. The slurry layer is heated to be dried and sintered. Thus, the first catalyst layer 20 is formed on the substrate 10 in the first region X.

### (3) Second Catalyst Layer 30

The second catalyst layer 30 is disposed on the substrate 10 in a second region Y extending between the upstream end I and a second position Q, which is at a second distance Lb from the upstream end I toward the downstream end J (that is, in the flow direction of the exhaust gas). The second distance Lb is 50% or more of the total length Ls of the substrate 10. The sum of the first distance La and the second distance Lb is equal to or greater than the total length Ls of the substrate 10. This allows the whole region of the substrate 10 to be covered with at least one of the first catalyst layer 20 or the second catalyst layer 30, which provides the exhaust gas purification device 100 with the satisfactory exhaust gas purification performance. The second catalyst layer 30 may have a length equal to the second distance Lb in the extending direction of the cell 14.

The second catalyst layer 30 contains rhodium. Rhodium mainly functions as a catalyst to reduce NOx. Rhodium may be particulate. Rhodium may be supported on carrier particles. The carrier particles may contain a metal oxide.

The second catalyst layer 30 contains an oxygen storage material. Examples of the oxygen storage material are as described above. The oxygen storage material in the second catalyst layer 30 contains a pyrochlore type Ce-Zr composite oxide and a fluorite type Ce-Zr composite oxide at a weight ratio of from 0.2:1 to 0.4:1. This allows the exhaust gas purification device 100 to have a high warm-up performance and a reduced deterioration of performance in use.

The second catalyst layer 30 may further contain another optional ingredient. Examples of another optional ingredient include, for example, a binder and an additive.

The second catalyst layer 30 can be formed as follows, for example. First, a slurry is prepared by mixing an aqueous solution of rhodium salt, an oxygen storage material, and an optional ingredient. The slurry is applied to the substrate 10 in the second region Y, thus forming a slurry layer. The slurry layer is heated to be dried and sintered. Thus, the second catalyst layer 30 is formed on the substrate 10 in the second region Y

### (4) Third Catalyst Layer 40

The third catalyst layer 40 is disposed on the second catalyst layer 30 in a third region Z extending between the upstream end I and a third position R, which is at a third distance Lc from the upstream end I toward the downstream end J (that is, in the flow direction of the exhaust gas). The third catalyst layer 40 formed on the second catalyst layer 30 allows the exhaust gas purification device 100 to have a high warm-up performance. The third distance Lc is 40% or less, especially 30% or less of the total length Ls of the substrate 10. This allows the exhaust gas purification device 100 to have a high warm-up performance. The third catalyst layer 40 may have a length equal to the third distance Lc in the extending direction of the cell 14.

The third catalyst layer 40 contains palladium. Palladium mainly functions as a catalyst to oxidize HC. Palladium may be particulate. Palladium may be supported on carrier particles. The carrier particles may contain a metal oxide.

The third catalyst layer 40 may contain an oxygen storage material. Examples of the oxygen storage material are as described above. The oxygen storage material in the third catalyst layer 40 may contain a fluorite type Ce-Zr composite oxide.

The third catalyst layer 40 may further contain another optional ingredient. Examples of another optional ingredient include, for example, a binder and an additive.

The total mass of the third catalyst layer 40 may be more than 0 g/L and 105 g/L or less based on the capacity of the substrate 10 in the third region Z. This provides the third catalyst layer 40 with a small thermal capacity, which allows the temperature of the third catalyst layer 40 to rise in a short period of time during warm-up, resulting in a satisfactory exhaust gas purification performance. That is, the exhaust gas purification device 100 can have the high warm-up performance.

The third catalyst layer 40 can be formed as follows, for example. First, a slurry is prepared by mixing an aqueous solution of palladium salt, an oxygen storage material, and an optional ingredient. The slurry is applied on the second catalyst layer 30 in the third region Z, thus forming a slurry layer. The slurry layer is heated to be dried and sintered. Thus, the third catalyst layer 40 is formed on the second catalyst layer 30 in the third region Z.

The exhaust gas purification device 100 according to the embodiment is applicable to various vehicles that include internal combustion engines.

The present disclosure is not limited to the above-described embodiments. The present disclosure can be subjected to various kinds of changes, additions, and deletions without departing from the technical spirit or scope of the present disclosure described in the claims.

### EXAMPLES

The following will specifically describe the present disclosure with the examples, but the present disclosure is not limited to these examples.

### (1) Materials Used in Examples and Comparative Examples

### a) Substrate (honeycomb substrate)

Material: Cordierite
Capacity: 875 cc
Thickness of Partition Wall: 2 mil (50.8 µm)
Cell Density: 600 pieces per square inch
Cross-Sectional Shape of Cell: Hexagon

### b) Material 1

A material obtained by adding La₂O₃ to Al₂O₃ (La₂O₃: 1 wt% to 10 wt%).

### c) Material 2 (fluorite type Ce-Zr composite oxide)

A material having a fluorite type structure obtained by adding trace amounts of Nd₂O₃, La₂O₃, and Y₂O₃ to an Al₂O₃-CeO₂-ZrO₂ composite oxide (CeO₂: 15 wt% to 30 wt%).

### d) Material 3 (pyrochlore type Ce-Zr composite oxide)

A material having a pyrochlore type structure obtained by adding trace amounts of rare-earth metal oxides, such as Pr₆O₁₁, La₂O₃, Y₂O₃, and Nd₂O₃, to a composite oxide containing CeO₂ and ZrO₂ by approximately equal molecular weights and subjecting it to a reduction treatment at a high temperature (CeO₂: 45 mol% to 65 mol%, ZrO₂: 45 mol% to 65 mol%).

### e) Material 4

Aqueous solution of palladium nitrate

### f) Material 5

Aqueous solution of rhodium nitrate

### g) Material 6

Barium sulfate

### (2) Producing Exhaust Gas Purification Device

### Example 1

The material 1, the material 2, the material 3, and the material 5 were added to stirred distilled water and mixed to prepare a suspended slurry 1. The prepared slurry 1 was poured through the downstream end of the substrate into the cells, and excess slurry was blown off with a blower. Consequently, the partition wall of the substrate was coated with the slurry 1 in the first region between the downstream end of the substrate and the first position, which was at a distance of 50% of the total substrate length from the downstream end of the substrate toward the upstream end of the substrate. The substrate was placed in a drying machine whose inside was held at 120°C for two hours to vaporize water contained in the slurry 1. Next, the substrate was heated in an electric furnace at 500°C for two hours. Thus, a first catalyst layer was formed.

The first catalyst layer contained the material 1 in an amount of 80 g/L, the material 2 in an amount of 60 g/L, the material 3 in an amount of 30 g/L, and Rh particles derived from the material 5 in an amount of 0.3 g/L, based on the capacity of the substrate in the first region.

Next, the material 1, the material 2, the material 3, and the material 5 were added to stirred distilled water and mixed to prepare a suspended slurry 2. The prepared slurry 2 was poured through the upstream end of the substrate into the cells, and excess slurry was blown off with a blower. Consequently, the partition wall of the substrate was coated with the slurry 2 in the second region between the upstream end of the substrate and the second position, which was at a distance of 50% of the total substrate length from the upstream end of the substrate toward the downstream end of the substrate. The substrate was placed in a drying machine whose inside was held at 120°C for two hours to vaporize water contained in the slurry 2. Next, the substrate was heated in an electric furnace at 500°C for two hours. Thus, a second catalyst layer was formed.

The second catalyst layer contained the material 1 in an amount of 66 g/L, the material 2 in an amount of 45 g/L, the material 3 in an amount of 9 g/L, and Rh particles derived from the material 5 in an amount of 0.3 g/L, based on the capacity of the substrate in the second region.

Next, the material 1, the material 2, the material 4, and the material 6 were added to stirred distilled water and mixed to prepare a suspended slurry 3. The prepared slurry 3 was poured through the upstream end of the substrate into the cells, and excess slurry was blown off with a blower. Consequently, a layer of the slurry 3 was formed in the third region between the upstream end of the substrate and the third position, which was at a distance of 30% of the total substrate length from the upstream end of the substrate toward the downstream end of the substrate. The substrate was placed in a drying machine whose inside was held at 120°C for two hours to vaporize water contained in the slurry 3. Next, the substrate was heated in an electric furnace at 500°C for two hours. Thus, a third catalyst layer was formed on the second catalyst layer.

The third catalyst layer contained the material 1 in an amount of 30 g/L, the material 2 in an amount of 50 g/L, Pd particles derived from the material 4 in an amount of 5.0 g/L, and the material 6 in an amount of 20 g/L, based on the capacity of the substrate in the third region.

Thus, an exhaust gas purification device of Example 1 was obtained.

### Example 2

An exhaust gas purification device was produced similarly to Example 1 except that the second catalyst layer contained the material 1 in an amount of 58 g/L, the material 2 in an amount of 45 g/L, the material 3 in an amount of 17 g/L, and Rh particles derived from the material 5 in an amount of 0.3 g/L, based on the capacity of the substrate in the second region.

### Comparative Example 1

An exhaust gas purification device was produced similarly to Example 1 except that the second catalyst layer contained the material 1 in an amount of 70 g/L, the material 2 in an amount of 45 g/L, the material 3 in an amount of 4.5 g/L, and Rh particles derived from the material 5 in an amount of 0.3 g/L, based on the capacity of the substrate in the second region.

### Comparative Example 2

An exhaust gas purification device was produced similarly to Example 1 except that the second catalyst layer contained the material 1 in an amount of 41 g/L, the material 2 in an amount of 45 g/L, the material 3 in an amount of 34 g/L, and Rh particles derived from the material 5 in an amount of 0.3 g/L, based on the capacity of the substrate in the second region.

### Comparative Example 3

An exhaust gas purification device was produced similarly to Comparative Example 1 except that the first catalyst layer contained the material 1 in an amount of 60 g/L, the material 2 in an amount of 60 g/L, the material 3 in an amount of 30 g/L, and Rh particles derived from the material 5 in an amount of 0.3 g/L, based on the capacity of the substrate in the first region, and that the second catalyst layer was formed after the third catalyst layer was formed (that is, the third catalyst layer was formed between the substrate and the second catalyst layer).

### Comparative Example 4

An exhaust gas purification device was produced similarly to Comparative Example 1 except that the third catalyst layer contained of the material 1 in an amount of 50 g/L, the material 2 in an amount of 50 g/L, Pd particles derived from the material 4 in an amount of 5.0 g/L, and the material 6 in an amount of 20 g/L, based on the capacity of the substrate in the third region, and that the second catalyst layer was formed after the third catalyst layer was formed (that is, the third catalyst layer was formed between the substrate and the second catalyst layer).

Table 1 summarizes the weight ratio (P:F) of the material 3 (pyrochlore type Ce-Zr composite oxide) to the material 2 (fluorite type Ce-Zr composite oxide) in the second catalyst layer, the vertical relation between the second catalyst layer and the third catalyst layer, the total amount of the first catalyst layer based on the capacity of the substrate in the first region, the total amount of the second catalyst layer based on the capacity of the substrate in the second region, and the total amount of the third catalyst layer based on the capacity of the substrate in the third region in each of the examples and the comparative examples.

**[Table 1]**

| | First Catalyst Layer | Second Catalyst Layer | | | Third Catalyst Layer | |
|---|---|---|---|---|---|---|
| | Total Amount [g/L] | Upper/Lower Position | Total Amount [g/L] | P:F | Upper/Lower Position | Total Amount [g/L] |
| Example 1 | 170.3 | Lower | 120.3 | 0.2:1 | Upper | 105 |
| Example 2 | 170.3 | Lower | 120.3 | 0.4:1 | Upper | 105 |
| Comparative Example 1 | 170.3 | Lower | 120.3 | 0.1:1 | Upper | 105 |
| Comparative Example 2 | 170.3 | Lower | 120.3 | 0.75:1 | Upper | 105 |
| Comparative Example 3 | 150.3 | Upper | 120.3 | 0.1:1 | Lower | 105 |
| Comparative Example 4 | 170.3 | Upper | 120.3 | 0.1:1 | Lower | 125 |

### (3) Aging Treatment

Each of the exhaust gas purification devices of the examples and the comparative examples was connected to an exhaust system of a V8 engine with a displacement of 4.6 L. A stoichiometric air-fuel mixture (air-fuel ratio A/F = 14.6) and a lean air-fuel mixture containing excess oxygen (A/F > 14.6) were alternately introduced to the engine at a time ratio of 3:1 on a fixed time cycle for 50 hours while a bed temperature of the exhaust gas purification device was maintained at 950°C. This was how the aging treatment of the exhaust gas purification devices was carried out.

### (4) Warm-Up Performance Evaluation

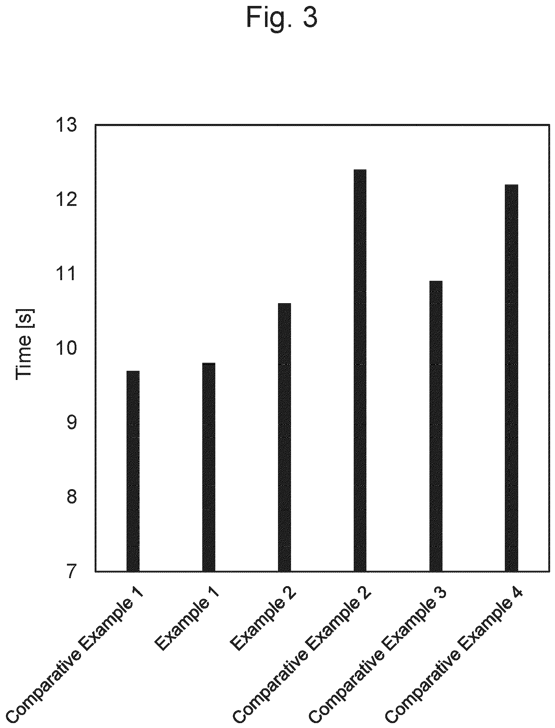

The center of the exhaust gas purification device after the aging treatment was cooled to 50°C, and then the exhaust gas purification device was connected to an exhaust system of an L4 engine with a displacement of 2.5 L. An air-fuel mixture having A/F of 14.4 was introduced to the engine, and the exhaust gas at about 500°C from the engine was introduced to the exhaust gas purification device. The THC contents of the exhaust gases at the upstream and downstream ends of the exhaust gas purification device were measured to determine the THC conversion rate. The time from the start of the introduction of the exhaust gas at 500°C to the exhaust gas purification device until the THC conversion rate reached 50% is shown in Table 2 and FIG 3. A shorter time for the THC conversion rate to reach 50% means a higher warm-up performance.

As illustrated in FIG 3, the exhaust gas purification devices of Examples 1 and 2 and Comparative Example 1 in which P:F was 0.1:1 to 0.4:1 exhibited the higher warm-up performance than the exhaust gas purification device of Comparative Example 2 in which P:F was 0.75:1.

The exhaust gas purification device of Comparative Example 4 in which the total amount of the third catalyst layer was 125 g/L exhibited the lower warm-up performance than the exhaust gas purification device of Comparative Example 3 in which the total amount of the third catalyst layer was 105 g/L. This would be because the total amount of the third catalyst layer was larger, i.e., the thermal capacity was larger, in Comparative Example 4, so the time required to raise the temperature of the exhaust gas purification device was longer. Although the total amount of the first catalyst layer was also different between Comparative Example 3 and Comparative Example 4, the difference in the total amount of the first catalyst layer would have had little effect on the warm-up performance because the first catalyst layer was kept at a relatively low temperature during the warm-up performance evaluation test, which would have led to only a small amount of THC conversion by the first catalyst layer.

The exhaust gas purification device of Comparative Example 1 in which the second catalyst layer was the lower layer and the third catalyst layer was the upper layer exhibited the higher warm-up performance than the exhaust gas purification device of Comparative Example 3 in which the second catalyst layer was the upper layer and the third catalyst layer was the lower layer. Although the total amount of the first catalyst layer was also different between Comparative Example 1 and Comparative Example 3, the difference in the total amount of the first catalyst layer would have had little effect on the warm-up performance as described above.

### (5) Catalytic Activity Evaluation

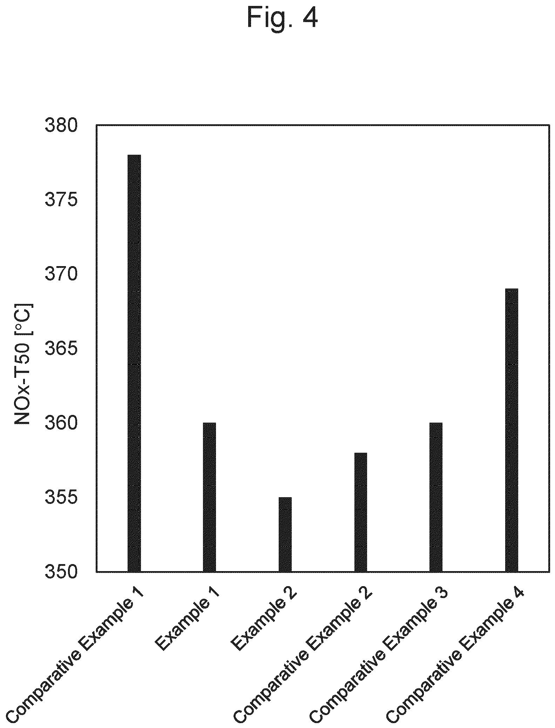

The exhaust gas purification device after the aging treatment was connected to an exhaust system of an L4 engine with a displacement of 2.5 L. An air-fuel mixture having A/F of 14.4 was introduced to the engine, and the exhaust gas at 600°C from the engine was cooled to 200°C by a heat exchanger and introduced to the exhaust gas purification device. While the heat exchanger was controlled to raise the temperature of the exhaust gas introduced to the exhaust gas purification device from 200°C at a constant rate, the NOx contents of the exhaust gases at the upstream and downstream ends of the exhaust gas purification device were measured to determine the NOx conversion rate. The flow rate of the exhaust gas was sufficiently large, and the rate of increase of the exhaust gas temperature was sufficiently small so that the exhaust gas purification device always had a uniform temperature in the gas flow direction. The exhaust gas temperature when the NOx conversion rate reached 50% (NOx-T50) is shown in Table 2 and FIG 4. A lower NOx-T50 means a higher catalytic activity of the exhaust gas purification device.

As illustrated in FIG 4, the exhaust gas purification devices of Examples 1 and 2 and Comparative Example 2 in which P:F was 0.2:1 to 0.75:1 exhibited the higher catalytic activity than the exhaust gas purification device of Comparative Example 1 in which P:F was 0.1:1. This would be because in Examples 1 and 2 and Comparative Example 2, the high oxygen storage and release capacity of the pyrochlore type Ce-Zr composite oxide reduced the deterioration of the exhaust gas purification device due to the aging treatment.

The exhaust gas purification device of Comparative Example 1 exhibited the lower catalytic activity than the exhaust gas purification devices of Comparative Examples 3 and 4 in which the second catalyst layer was the upper layer and the third catalyst layer was the lower layer. However, the exhaust gas purification devices of Examples 1 and 2 and Comparative Example 2 exhibited the catalytic activity equal to or greater than the catalytic activity of the exhaust gas purification devices of Comparative Examples 3 and 4.

### (6) Performance Evaluation at Reduced Temperature

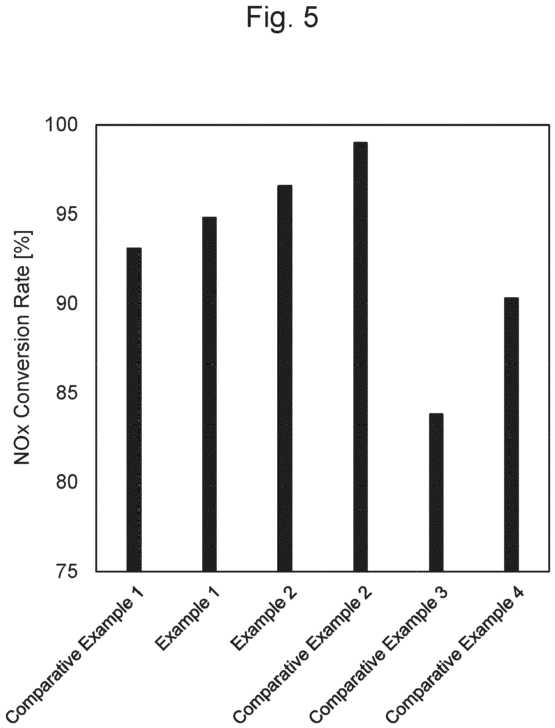

The exhaust gas purification device after the aging treatment was connected to an exhaust system of an L4 engine with a displacement of 2.5 L. An air-fuel mixture having A/F of 14.4 was introduced to the engine, and the exhaust gas from the engine was introduced to the exhaust gas purification device. The temperature of the exhaust gas at the upstream end of the exhaust gas purification device was first set at 600°C, and then lowered to 500°C or less, during which the NOx contents of the exhaust gases at the upstream and downstream ends of the exhaust gas purification device were measured to determine the NOx conversion rate. The NOx conversion rate when the temperature of the exhaust gas at the upstream end of the exhaust gas purification device became 500°C is shown in Table 2 and FIG 5. A higher NOx conversion rate means higher performance at a reduced temperature.

As illustrated in FIG 5, the exhaust gas purification devices of Examples 1 and 2 and Comparative Examples 1, 2 and 4 in which the total amount of the first catalyst layer was 170.3 g/L exhibited the higher performance at the reduced temperature than the exhaust gas purification device of Comparative Example 3 in which the total amount of the first catalyst layer was 150.3 g/L. This would be because in Examples 1 and 2 and Comparative Examples 1, 2 and 4, the total amount of the first catalyst layer was larger, i.e., the thermal capacity was larger, which led to a smaller temperature drop of the exhaust gas purification device during the exhaust gas temperature reduction.

**[Table 2]**

| | Warm-Up Performance Evaluation | Catalytic Activity Evaluation | Performance Evaluation at Reduced Temperature |
|---|---|---|---|
| | Time [s] | NOx-T50 [°C] | NOx Conversion Rate [%] |
| Example 1 | 9.8 | 360 | 94.8 |
| Example 2 | 10.6 | 355 | 96.6 |
| Comparative Example 1 | 9.7 | 378 | 93.1 |
| Comparative Example 2 | 12.4 | 358 | 99.0 |
| Comparative Example 3 | 10.9 | 360 | 83.8 |
| Comparative Example 4 | 12.2 | 369 | 90.3 |

### DESCRIPTION OF SYMBOLS

- 10: Substrate
- 12: Frame portion
- 14: Cell
- 16: Partition wall
- 20: First catalyst layer
- 30: Second catalyst layer
- 40: Third catalyst layer
- 100: Exhaust gas purification device
- I: Upstream end (first end)
- J: Downstream end (second end)
- P: First position
- Q: Second position
- R: Third position
- X: First region
- Y: Second region
- Z: Third region

## Claims

1. An exhaust gas purification device comprising:
a substrate with a total length (Ls), the substrate having an upstream end through which an exhaust gas flows into the substrate and a downstream end through which the exhaust gas flows out from the substrate;
a first catalyst layer disposed on the substrate in a first region, the first region extending between the downstream end and a first position, the first position being at a first distance (La) from the downstream end toward the upstream end, the first catalyst layer containing rhodium, the first distance (La) being from 50% to 70% of the total length (Ls) of the substrate;
a second catalyst layer disposed on the substrate in a second region, the second region extending between the upstream end and a second position, the second position being at a second distance (Lb) from the upstream end toward the downstream end, the second catalyst layer containing rhodium and an oxygen storage material, the second distance (Lb) being 50% or more of the total length (Ls) of the substrate, the oxygen storage material containing a pyrochlore type Ce-Zr composite oxide and a fluorite type Ce-Zr composite oxide at a weight ratio of from 0.2:1 to 0.4:1; and
a third catalyst layer disposed on the second catalyst layer in a third region, the third region extending between the upstream end and a third position, the third position being at a third distance (Lc) from the upstream end toward the downstream end, the third catalyst layer containing palladium, the third distance (Lc) being 40% or less of the total length (Ls) of the substrate.

2. The exhaust gas purification device according to claim 1,
wherein a total mass of the first catalyst layer based on a capacity of the substrate in the first region is 170 g/L or more.

3. The exhaust gas purification device according to claim 1 or 2,
wherein a total mass of the third catalyst layer based on a capacity of the substrate in the third region is more than 0 g/L and 105 g/L or less.

4. The exhaust gas purification device according to any one of claim 1 to 3,
wherein the first catalyst layer further includes an oxygen storage material.
